# EUROPÄISCHE PATENTSCHRIFT

(11) **EP 0 625 945 B1**
(45) Veröffentlichungstag und Bekanntmachung des Hinweises auf die Patenterteilung: **15.11.1995**
(21) Anmeldenummer: 94902625.6
(22) Anmeldetag: 21.12.1993
(51) Int. Cl.: B60K 5/08, B60K 6/00, B60K 1/04, B62D 29/00

(54) **GRUNDEINHEIT FÜR EIN KRAFTFAHRZEUG**
BASIC UNIT FOR A MOTOR VEHICLE
UNITE DE BASE DE VEHICULE A MOTEUR

(30) Priorität: 22.12.1992 DE 9217503 U
(43) Veröffentlichungstag der Anmeldung: 30.11.1994
(73) Patentinhaber: BGH-SERVICE BERGHAUER GmbH, D-82538 Geretsried (DE)
(72) Erfinder: BERGHAUER, Ralf, D-82538 Geretsried 1 (DE); CASEY, John, Tramore, County Waterford (IE)
(74) Vertreter: Jönsson, Hans-Peter, Dr.Dipl.-Chem.
(86) Internationale Anmeldenummer: DE9301242
(87) Internationale Veröffentlichungsnummer: WO9414628

(56) Entgegenhaltungen:
- EP-A- 0 452 548
- DE-A- 4 032 605
- DE-C- 713 406
- GB-A- 444 606
- US-A- 2 048 926

## Beschreibung

Die Erfindung bezieht sich auf eine Grundeinheit für ein Kraftfahrzeug, bestehend aus einem Tragrohr, wenigstens zwei voneinander unabhängig betreibbaren und symetrisch zur Längsachse der Grundeinheit angeordneten Antriebsmotoren samt Hilfseinrichtungen und einem Schaltgetriebe sowie wenigstens einem Achsgetriebe samt zugehöriger Drehmomentübertragungseinrichtungen, wobei die beiden Antriebsmotoren mittels eines Anschlußgehäuses an das Tragrohr angeschlossen sind und über je eine Trennkupplung einzeln oder gemeinsam mit der Eingangswelle des Schaltgetriebes verbindbar sind (siehe z.B. DE-C-713406).

Aus einem Tragrohr und zwei voneinander unabhängig betreibbaren und symetrisch zu dessen Längsachse am einen Ende des Tragrohres angeordneten Antriebsmotoren sowie einem Schaltgetriebe und ein einem Achsgetriebe bestehende Antriebseinheiten für Kraftfahrzeuge sind in einer Vielzahl von Ausgestaltungsformen bekannt, wobei aber allen bekannten Ausgestaltungsformen solcher Antriebseinheiten zum einen die Verwendung von als Reihenmotoren ausgebildeten Brennkraftmaschienen und zum anderen die Nichtnutzung des Hohlraumes des Tragrohres gemeinsam ist. Die Verwendung von Reihenmotoren als Antriebsmotoren erfordert einen großen Einbauraum für die Antriebseinheit, da Reihenmotoren im Verhältnis zur abnehmbaren Leistung verhältnimäßig groß bauen. Für eine optimale Ausnutzung des von der fahrzeugkarosserie umbauten Raumes und damit eine möglichst weitgehende Gewichtsverminderung des Fahrzeuges insgesamt sind die bekannten Antriebseinheiten der hier in Rede stehenden Bauart daher nicht geeignet. Ein weiterer Nachteil bei der Verwendung von Reihenmotoren als Antriebsmotoren wird bei dem Versuch einer weitgehend einheitlichen Auslegung der Antriebseinheit für unterschiedliche Fahrzeugtypen, beispielsweise Straßenfahrzeuge oder Off-Road-Fahrzeuge offensichtlich, dahingehend, daß für jeder dieser beiden Fahrzeutypen eine eigene Konstruktion erforderlich ist, wobei zudem auch keine gleichzeitige Verwendung einzelner Baugruppen möglich ist. Abgesehen vom Raumbedarf der Antriebsmotoren beanspruchen bei herkömmlichen Fahrzeugkonstruktionen ferner auch die Versorgungseinrichtungen für die Antriebsmotoren, insbesondere der Kraftstofftank und die Batterien einen keineswegs unwesentlichen Teil des von der Fahrzeugkarosserie umbauten Raumes, was entweder zu lasten des Nutzbaren Fahrzeuginnenraumes oder zu lasten einer Gewichtserhöhung des gesamtfahrzeuges infolge einer notwendigen Vergrößerung der Karosserie geht. Neben dem Nachteil einer Gewichtserhöhung bedingt die herkömmliche Einzelunterbringung der Versorgungseinrichtungen auch einen hohen Montageaufwand mit sich.

Der Erfindung liegt die Aufgabe zugrunde eine Grundeinheit für ein Kraftfahrzeug zu schaffen, welche zur optimalen Nutzung des von der Karosserie umbauten Raumes eine bei großer Leistung kleinbauende Gestaltung der Antriebseinheit sowie den wahlweisen Betrieb des Fahrzeuges mit einem oder zwei Antriebsmotoren, insbesondere eine Ausstattung des Fahrzeuges als Hybridfahrzeug ermöglicht und dabei eine möglichst weitgehende Integration der zum Betrieb des Fahrzeuges erforderlichen Hilfs- und Betätigungseinrichtungen in die Grundeinheit ermöglicht, dahingehend daß die die Unterbringung der Hilfs- und Betätigungseinrichtungen zum einen möglichst raumsparend und zum anderen in einer weitgehendst vormontierbaren Weise erfolgen kann. Darüberhinaus ist es Aufgabe der Erfindung die Grundeinheit in einer solchen weise zu gestalten, daß deren Bauteile untereinander austauschbar und mit einem geringstmöglichen Aufwand in möglichst weitgehender Vereinheitlichung sowohl der Bauteile als auch der wechselseitigen Anschlußmittel zusammenbaubar sind.

Diese Aufgabe wird erfindungsgemäß dadurch gelöst, daß das Tragrohr durch einen Längenabschnitt eines Strangpressprofiles gebildet und starr mit dem Anschlußgehäuse verbunden ist, wobei die Antriebsmotoren jeweils mit einer eigenen, im Motorgehäuse angeordneten Schwungmasse versehen die Trennkupplungen innerhalb des Anschlußgehäuses angeordnet und die Antriebsmotoren vermittels untereinander gleich ausgebildeter Anschlußflächen austauschbar mit dem Anschlußgehäuse verbunden sind. Dadurch wird zum einen eine absolut starre, den Ein-oder Anbau sonstiger zum Betrieb des Fahrzeuges erforderlicher Ausstattungen oder Hilfs- bzw. Versorgungseinrichtungen ermöglichende Ausbildung der Grundeinheit insgesamt gewährleistet und zum anderen erreicht, für eine Ausstattung des Fahrzeuges mit untereinander gleich- oder verschiedenartigen Antriebsmotoren lediglich ein entsprechender, seinerseits serienmäßiger Antriebsmotor an die eine oder andere Seite des Anschlußgehäuses angebaut zu werden braucht. Insbesondere sieht die Erfindung dabei vor, daß wenigstens einer der Antriebsmotoren durch einen mit seiner Kurbelwellenachse quer zur Fahrtrichtung ausgerichtet angeordneten Sternmotor gebildet ist. Dies gewährleistet eine kleinbauende Ausbildung der Antriebseinheit insgesamt, da Sternmotoren bezogen auf den erforderlichen Einbauraum bei kleinstem Raumbedarf die höchste Leistung erbringen.

Das Fahrzeug kann daher bei Verwendung untereinander einheitlicher Aggregate wahlweise entweder so ausgerüstet sein, daß die beiden voneinander unabhängig oder gemeinsam einsetzbaren Antriebsmotoren jeweils durch eine Brennkraftmaschine gebildet und jeweils als Sternmotor ausgebildet sind, oder daß von den beiden wahlweise einsetzbaren Antriebsmotoren einer durch eine als Sternmotor ausgebildete Brennkraftmaschine und einer durch einen Elektromotor gebildet ist. Der oder die Sternmotoren sind dabei zweckmäßigerweise durch X-Motore gebildet, deren Zylinder einander paarweise gegenüberliegend und in einer gemeinsamen Ebene angeordnet sind und deren Hubkolben vermittels eines Kurbelschleifengetriebes mit der Motorwelle zusammenarbeiten. Brennkraftmaschinen bzw. Motoren dieser Bauweise zeichnen sich in hervorragender Weise dadurch aus, daß sie vollkommen massenausgeglichen sind und daher auch schwingungsfrei arbeiten, mit der Folge, daß auf aufwendige Lagerungen zur Entkoppelung des Antriebsaggregates von der Fahrzeugkarosserie ebenso verzichtet werden kann, wie auf den Einsatz von Dämmitteln zur Dämpfung vom Antriebsaggregat ausgehender Schwingungen oder Vibrationen in der Fahrzeugkarosserie. Dies ermöglicht neben einer Verringerung des notwendigen Herstellungsaufwandes auch eine erhebliche Verringerung Montageaufwandes und in Verbindung damit eine beträchtliche Verringerung des Gesamtgewichtes des Fahrzeuges.

Bevorzugterweise sollen die als X-Motore ausgebildeten Brennkraftmaschinen als Zweitaktmotoren gestaltet sein, da dieses Arbeitsprinzip einer Brennkraftmaschine bei hoher Leistung den geringstmöglichen Bauaufwand für die Herstellung der Motoren selbst gewährleistet.

Um den unterschiedlichen Betriebsbedingungen verschiedener Fahrzeugtzypen Rechnung zu tragen kann für ausschließlich für den Straßenbetrieb vorgesehene Fahrzeuge zur möglichsten Verringerung des Luftwiderstandes vorgesehen sein, daß die Abtriebswellen der beiden symetrisch zur Längsachse der Grundeinheit angeordneten Antriebsmotoren höhengleich zu den Radachsen angeordnet sind, woraus sich unter Inkaufnahme einer für Straßenfahrzeuge sogar erwünschten geringeren Bodenfreiheit eine niedrige Bauweise des Fahrzeuges insgesamt ergibt.

Andererseits kann für sog. Off-Road-Fahrzeuge Fahrzeuge, die nicht ausschließlich zum Betrieb auf Straßen bestimmt sind, und daher eine vergrößerte Bodenfreiheit aufweisen müßen, auch vorgesehen sein, daß die Abtriebswellen der beiden symetrisch zur Längsachse der Grundeinheit angeordneten Antriebsmotoren höhenversetzt zu den Radachsen angeordnet sind.

Innerhalb dieser grundsätzlichen auf den bestimmungsgemäßen Betrieb des Fahrzeuges ausgerichteten Anordnungsweisen umfaßt der Rahmen der Erfindung bezüglich der Anordnung der Antriebseinheit ferner noch Abwandlungsmöglichkeiten hinsichtlich der Anordnung der Antriebseinheit bezüglich der Gesamtlänge des Fahrzeuges, dahingehend, daß zum Ausgleich einer großen Beladungsfähigkeit des Fahrzeuges die Antriebseinheit insgesamt vor der Vorderachse angeordnet wird, oder dahingehend, daß zwecks Verlagerung des Gesamtschwerpunktes zur Fahrzeugmitte hin, Schaltgetriebe und Antriebsmotoren hinter der Vorderachse angeordnet sind, sowie schließlich dahingehend, daß bei frontgetriebenen Fahrzeugen zur Erhöhung der Traktion der Vorderräder z.B. das Schaltgetriebe vor und die Antriebsmotoren vor der Vorderachse angeordnet sind.

Unanhängig von der jeweils gewählten Lage der Antriebseinheit kann für die Bauart der Antriebseinheit entweder, nach einer ersten Ausgestaltungsform vorgesehen sein, daß das Anschlußgehäuse und das Getriebegehäuse sowie gegebenenfalls das Achsgetriebegehäuse eine Baueinheit bilden, oder daß gemäß einer zweiten Ausgestaltungsform das Getriebegehäuse und gegebenenfalls das Achsgetriebegehäuse mittels Anschlußflansche und Verschraubung starr mit dem Anschlußgehäuse verbunden sind, wobei das Anschlußgehäuse seinerseits in jedem Falle starr mit dem Tragrohr verbunden ist.

Eine besonders zweckmäßige Einzelausgestaltung der Antriebsverbindung zwischen den Antriebsmotoren und dem Schaltgetriebe besteht darin, daß die die Antriebsverbindung zwischen den Antriebsmotoren und dem Schaltgetriebe vermittelnden Trennkupplungen mit einem gleichfalls im Anschlußgehäuse untergebrachten Zentralrad verbunden sind, welches vermittels eines Ketten-oder Zahnriementriebes mit der Getriebeeingangswelle in Antriebsverbindung steht.

Im Rahmen der Ausbildung der Grundeinheit zu einer auch die Versorgungsanlagen für die Antriebseinheit aufnehmenden und insgesamt vormontierbaren Kompakteinheit ist erfindungsgemäß weiterhin vorgesehen, daß Versorgungseinrichtungen für die Antriebsmotoren, insbesondere der Kraftstofftank des Kraftfahrzeuges, in das durch einen Abschnitt eines Strangpressprofiles gebildete Tragrohr integriert sind.
In einer anderen Ausgestaltungsform kann aber auch vorgesehen sein, daß das durch einen Längenabschnitt eines Strangpressprofiles gebildete Tragrohr mit innenliegend angeordneten Mitteln zur Aufnahme von, insbesondere die Energiequelle für einen als Elektromotor ausgebildeten Antriebsmotor eines Hybridfahrzeuges bildenden, Batterien ausgestattet ist.

Schließlich kann in einer weiteren Ausgestaltungsform auch noch vorgesehen sein, daß die Versorgungseinrichtungen für beide Arten von Antriebsmotoren, d.h. der Kraftstofftank für den als Brennkraftmaschine ausgebildeten und/oder die Batterien für den als Elektromotor ausgebildeten Antriebsmotor des Kraftfahrzeuges, in dem durch einen Abschnitt eines Strangpressprofiles gebildeten Tragrohr untergebracht sind.

Im Einzelnen ist hierfür erfindungsgemäß vorgesehen, daß der Kraftstofftank aus einer kraftstoffdampfdichten, flexiblen Hülle mit unlösbar und gleichfalls kraftstoffdampfdicht daran angeschossener Einfülleitung samt evtl. Entlüftungsleitung besteht und im eingebauten Zustand außenseitig mindestens örtlich an den Innenumfangsflächen des Tragrohres festgelegt, z.B. vermittels Verrastung von an der Außenseite der flexiblen Hülle angeordneter Wülste oder dergl. in Nutausnehmungen des Tragrohres oder lösbarer Verklebung verbunden ist, wobei die lösbare Verklebung der den Kraftstofftank bildenden flexiblen Hülle mit den Innenflächen des Tragrohres umlaufend streifenförmig gestaltet ist. Falls eine Befestigung mittels lösbarer Verklebung vorgesehen ist kann die Außenfläche der den Kraftstofftank bildenden flexiblen Hülle vor dem Einführen in das Tragrohr mit umlaufenden Streifen eines geeigneten Klebstoffauftrages versehen und ebenso wie bei einer Verrastung an den Außenflächen der flexiblen Hülle vorgesehener Wülste oder dergl. in Nuten des Tragrohres die flexible Hülle nach dem Einführen in das Tragrohr aufgebläht werden, derart daß die Klebstoffaufträge mit den inneren Wandungflächen des Tragrohres in Berührung gelangen und in geeigneter Weise ausgehärtet werden können. Der Vorteil dieser Anordnung besteht neben einem einfachen Einbau in einer weitgehendsten Ausnutzung des Volumens des Tragrohres.
Hinsichtlich der Unterbringung der die Energiequelle für einen als Elektromotor ausgebildeten Antriebsmotor bildenden Batterien ist erfindungsgemäß vorgesehen, daß im Tragrohr innenliegend längsgerichtet verlaufende, Lauf-oder Tragschienen für die Abstützung und Festlegung der Batterien bildende, Profilleisten oder dergl. ausgebildet sind, wobei vorzugsweise weiter vorgesehen ist, daß ein aus mehreren Batterien bestehender Batteriesatz im Tragrohr vermittels einer, gegebenenfalls rollengelagerten Tragplatte bzw. eines Tragrahmens längsverschiebbar bzw. herausziehbar auf den innenliegend und längsgerichtet verlaufenden Lauf-oder Tragschienen bildenden Profilleisten angeordnet ist.

In weiterer die Ausbildung des Tragrohres als Strangpressprofil nutzender Vervollständigung der Grundeinheit zu einer komplett vormontierbaren Einheit ist nach einem anderen Merkmal der Erfindung ferner vorgesehen, daß das Tragrohr eine im allgemeinen rechteckige oder ovale Profilquerschnittsform aufweist und mit einer Vielzahl von längsgerichteten Druckmittel-Leitungs-Kanälen und/oder wenigstens schlitzförmig offenen Nutausnehmungen ausgestattet ist, wobei die Kanäle einen geschlossenen Querschnitt aufweisen und unmittelbar als Fluid-Leitungen dienen, während die Nutausnehmungen zur Aufnahme aus festem Material bestehender Leitungen oder dergl. bestimmt sind.
Vor allen ist vorgehsehen, daß das Tragrohr mit wenigstens einem ersten längsgerichteten Kanal für die Verbindung des Hauptbremszylinders mit den Hinterradbremsen ausgestattet ist, wobei die flexiblen Abzweigleitungen zu den einzelnen Radbremszylindern mittels einschraubbarer Anschlußnippel an den jeweiligen Kanal anschließbar sind, und ferner mit wenigstens einem zweiten längsgerichteten Kanal ausgestattet ist, der wenigstens über einen Teil seiner Länge hin als Kraftstoffleitung für die Verbindung des Kraftstofftanks mit dem oder den Antriebsmotoren dient, sowie mit wenigstens einem dritten längsgerichteten Kanal ausgestattet ist, der dem oder den Antriebsmotoren als Abgasleitung dient.

Hinsichtlich der Ausbildung bzw. Anordnung einseitig offener Nutausnehmungen in den als Strangpressprofil ausgebildeten Tragrohr kann erfindungsgemäß vorgesehen sein, daß wenigstens eine erste längsgerichtete Nutausnehmung der Aufnahme elektrischer Leitungen, insbesondere eines Kabelbaumes und wenigstens eine zweite längsgerichtete Nutausnehmung der Aufnahme eines Seilzuges, insbesondere des Handbremsseilzuges, dient.

In weiterer Vervollständigung des Erfindungsgedankens ist ferner noch vorgesehen, daß bei einer Ausstattung des Fahrzeuges mit Allradantrieb die Antriebsverbindung vom Schaltgetriebe bzw. von der Vorderachse zur Hinterachse vermittels eines Riementriebes, insbesondere eines Zahnriementriebes, bewerkstelligt ist und daß dabei der Riemen, insbesondere der Zahnriemen, an den einander gegenüberliegenden Außenflächen des Tragrohres angeordnet und geführt ist. Im Einzelnen ist in entsprechender Weiterbildung ds das Tragrohr bildenden Strangpressprofiles vorgesehen, daß für die Aufnahme und Führung des die Antriebsübertragung auf die Hinterachse bewirkenden Riemens, insbesondere Zahnrienmens an den einander gegenüberliegenden Außenflächen des Tragrohres einen symetrisch oder asymetrisch T-förmigen Profilquerschnitt aufweisende Führungsschächte ausgebildet sind.
Der Riemen, insbesondere Zahnriemen, ist bei dieser bezüglich des Tragrohres außenliegenden Anordnung über an die beiden Enden des Tragrohres anschließend zum einen am Getriebegehäuse und zum anderen am Hinterachsgetriebegehäuse angeordnete und gelagerte, dem Votrieb angepasste Riemenscheiben, insbesondere Zahnriemenräder, geführt, wobei z.B. untereinander gleichgroße Riemenscheiben oder Zahnriemenräder, deren Durchmesser der Profilhöhe des Tragrohres entspricht, eingesetzt sein können.

Schließlich ist in weiterer Vervollkommnung der Vormontierbarkeit der Grundeinheit erfindungsgemäß auch noch vorgesehen, daß am Tragrohr in an sich bekannter Weise Betätigungs- und Bedieneinrichtungen, wie Schalthebel und Handbremshebel und dergl. angeschlossen bzw. abgestützt und befestigt sind.

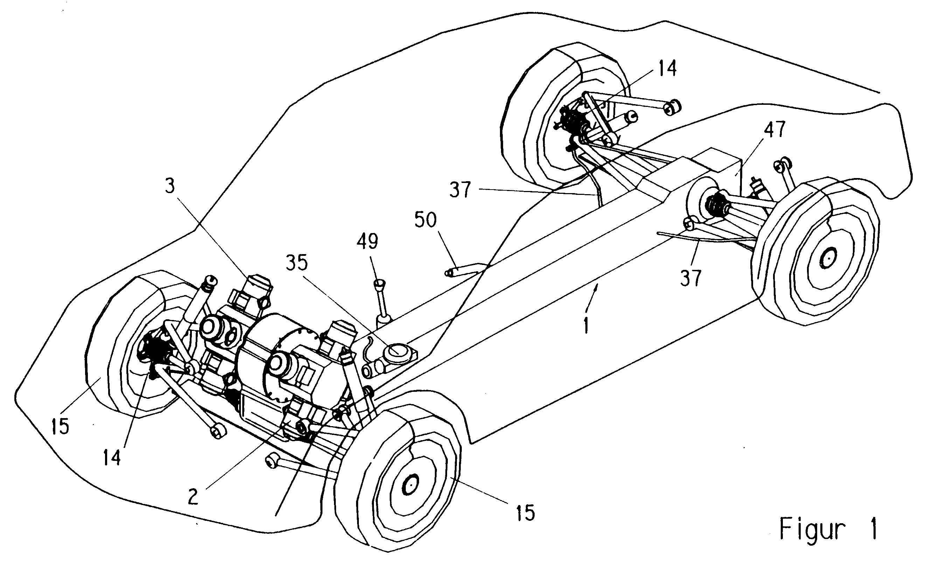

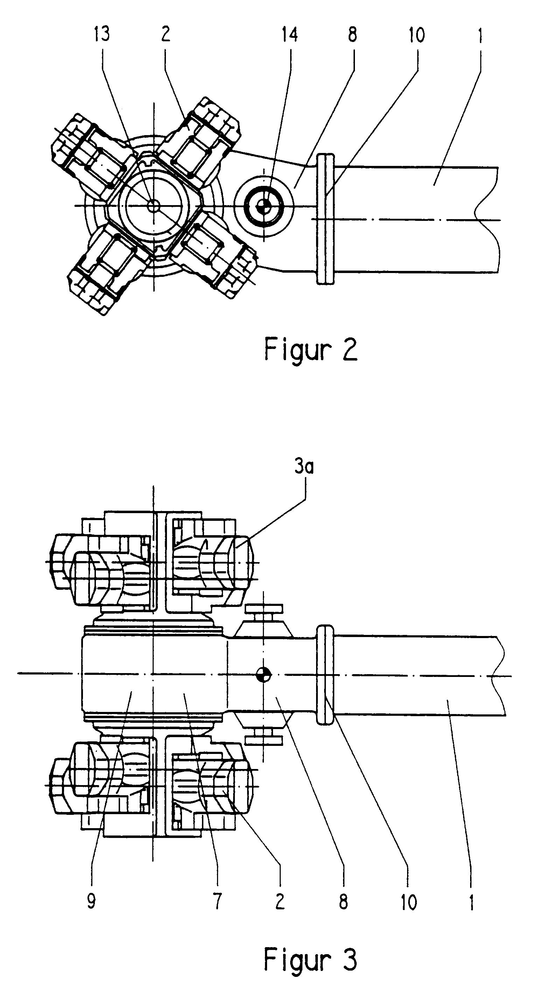

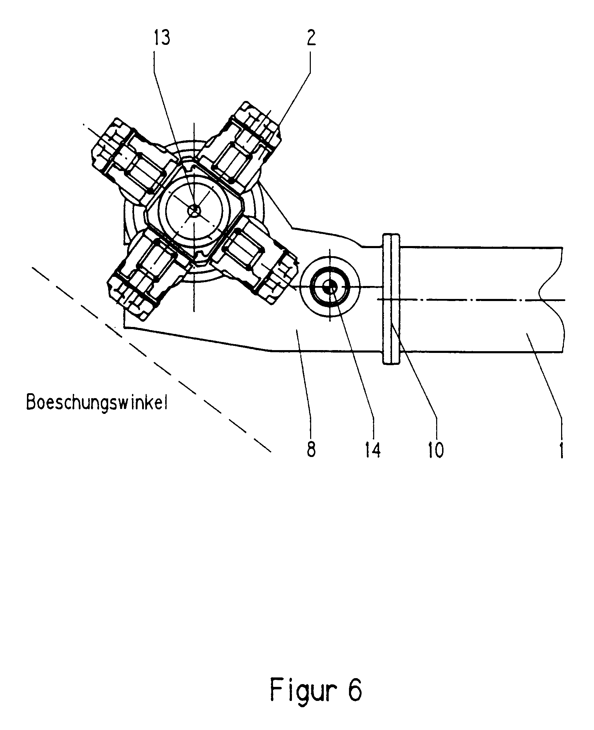

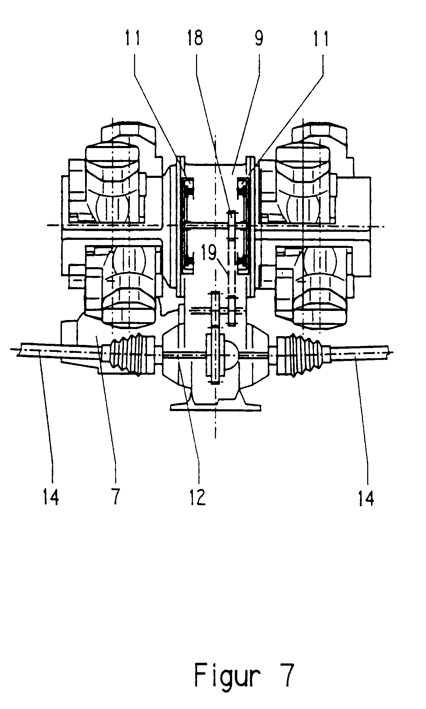

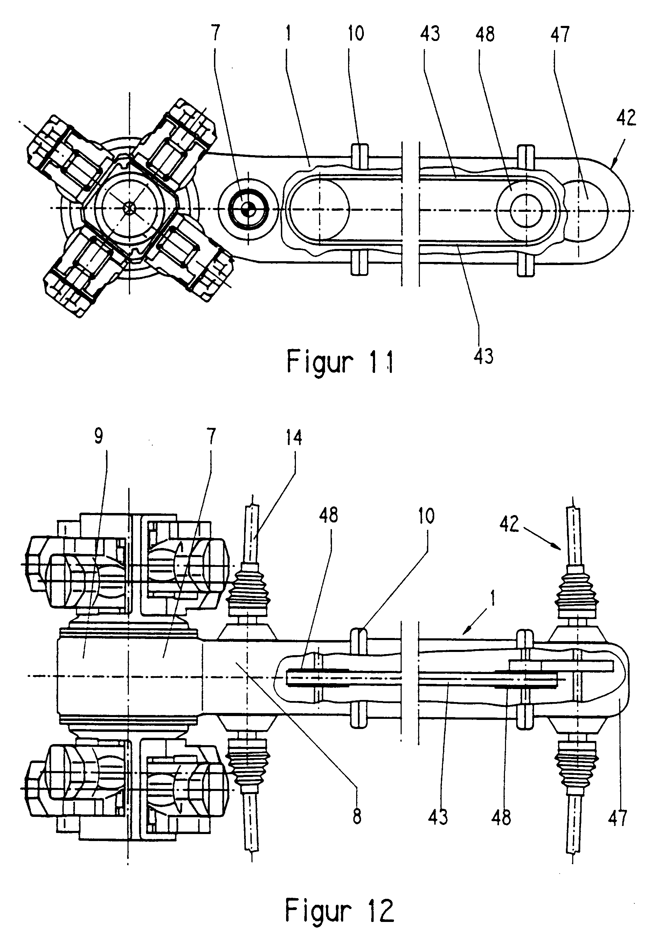

Die Erfindung ist in der nachfolgenden Beispielsbeschreibung anhand einiger in der Zeichnung dargestellter Ausführungsbeispiele im Einzelnen beschrieben. In der Zeichnung zeigt die
- Figur 1: eine schaubildliche Darstellung einer Grundeinheit eines Fahrzeuges;
- Figur 2: eine abschnittsweise und schematische Seitenansicht einer ersten Ausführungsform der Grundeinheit bei zu den Radachsen höhengleich angeordneten Abtriebswellen der Antriebsmotoren;
- Figur 3: eine Draufsicht zur Darstellung der Figur 2;
- Figur 4: eine abschnittsweise und schematische Seitenansicht einer zweiten Ausführungsform der Grundeinheit bei zu den Radachsen höhengleich angeordneten Abtriebswellen der Antriebsmotoren;
- Figur 5: eine Draufsicht zur Darstellung der Figur 4;
- Figur 6: eine abschnittsweise und schematische Seitenansicht einer Ausführungsform der Grundeinheit bei zu den Radachsen nicht höhengleich angeordneten Abtriebswellen der Antriebsmotoren;
- Figur 7: eine teilweise auf geschnittene Draufsicht auf ein Anschlußgehäuse;
- Figur 8: einen abschnittsweisen Längsschnitt durch das Tragrohr einer Grundeinheit mit eingebautem Kraftstofftank;
- Figur 9: einen abschnittsweisen Längsschnitt durch das Tragrohr einer Grundeinheit mit eingebautem Batteriesatz;
- Figur 10: einen Schnitt durch das Tragrohr gemäß Figur 9;
- Figur 11: eine schematische Seitenansicht der Grundeinheit eines mit einem Allradantrieb ausgestatteten Fahrzeuges;
- Figur 12: eine Draufsicht zu der Darstellung nach Figur 11;

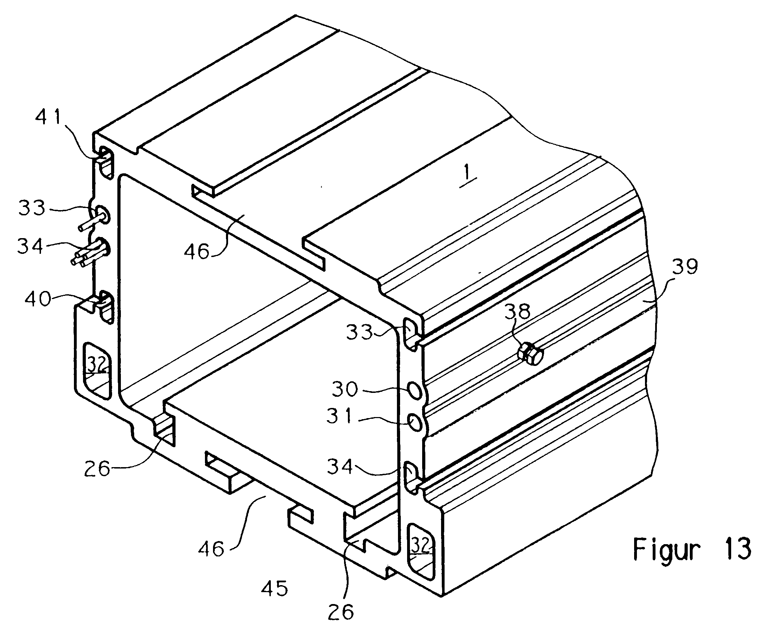

- Figur 13: eine abschnittweise schaubildliche Darstellung eines Tragrohrprofiles.

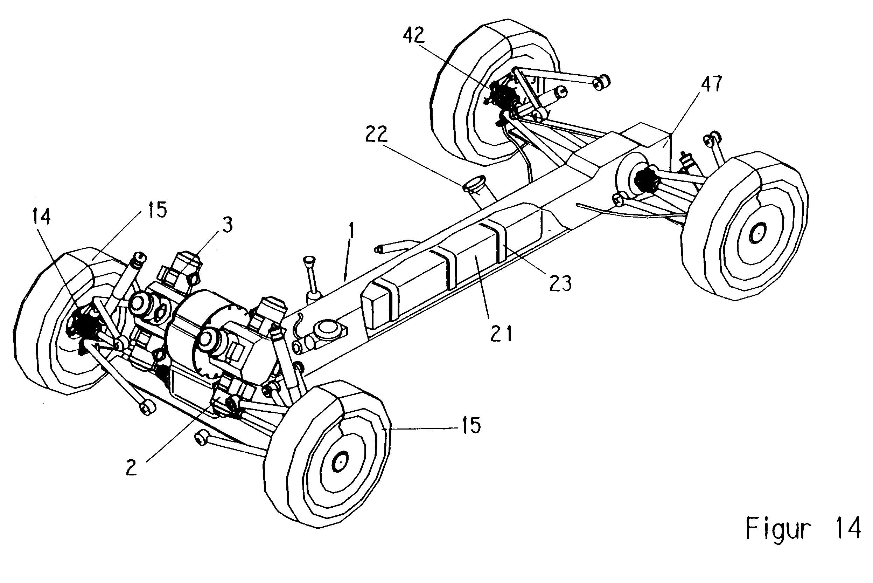

- Figur 14: eine schaubildliche Darstellung einer weiteren Ausführungsform der Grundeinheit eines Fahrzeuges;

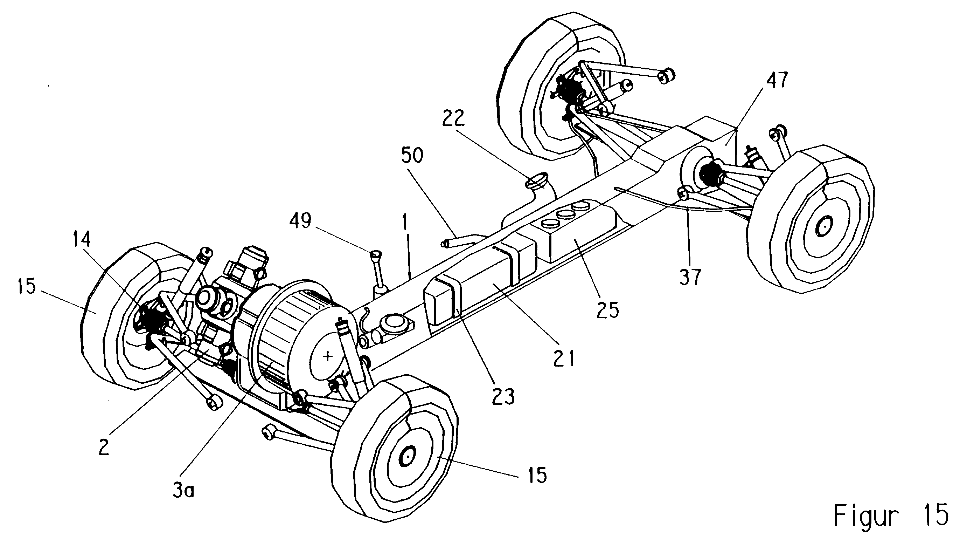

- Figur 15: eine schaubildliche Darstellung einer Grundeinheit eines mit einem Hybridantrieb ausgestatteten Fahrzeuges;
- Figur 16: eine schaubildliche Darstellung einer Grundeinheit eines nur mit einem Elerktromotor ausgestatteten Fahrzeuges;
- Figur 17: eine schaubildliche Darstellung einer Grundeinheit eines nur mit einer Brennkraftmaschine ausgestatteten Fahrzeuges;
Die Grundeinheit eines Kraftfahrzeuges besteht bei allen in der Zeichnung dargestellten Ausführungsbeispielen jeweils aus einem Tragrohr 1, zwei voneinander unabhängig betreibbaren und symetrisch zur Längsachse der Grundeinheit angeordneten Antriebsmotoren 2 und 3 bzw.3a samt Versorgungseinrichtungen 21 und/oder 25 und einem Schaltgetriebe 7 sowie wenigstens einem Achsgetriebe 8 samt zugehöriger Drehmomentübertragungseinrichtungen. Die beiden Antriebsmotoren 2 und 3 bzw. 3a sind mittels eines Anschlußgehäuses 9 einerseits an das Tragrohr 1 und andererseits an das Schaltgetriebe 7 angeschlossen. Das Tragrohr 1 durch einen Längenabschnitt eines Strangpressprofiles gebildet und vermittels einer Flanschverschraubung 10 starr mit dem Anschlußgehäuse 9 verbunden, wobei im Anschlußgehäuse 9 Trennkupplungen 11 angeordnet sind, vermittels derer die Antriebsmotoren 2 und/oder 3 bzw. 3a entweder einzeln oder gemeinsam mit der Eingangswelle 12 des Schaltgetriebes 7 kuppelbar sind. Die Antriebsmotoren 2 und 3 bzw. 3a sind vermittels untereinander gleich ausgebildeter, in der Zeichnung nicht im Einzelnen dargestellter, Anschlußflächen austauschbar und starr mit dem Anschlußgehäuse 9 derart verbindbar, daß zum einen eine absolut starre Ausbildung der Grundeinheit insgesamt gewährleistet ist und zum anderen erreicht wird, daß für eine Ausstattung des Fahrzeuges mit untereinander gleich- oder verschiedenartigen Antriebsmotoren lediglich eine Form des Anschlußgehäuses erforderlich ist. Bei der in den Figuren 2 und 3 angedeuteten Ausführungsform sind im Unterschied zu der in der Figur 1 dargestellten Ausführungsform die beiden an das Anschlußgehäuse 9 angeschlossenen Antriebsmotoren 2 und 3 jeweils durch eine mit ihrer Kurbelwellenachse quer zur Fahrtrichtung ausgerichtet angeordnete, als Sternmotor gestalte Brennkraftmaschine gebildet. Bei dem in der Figur 1 dargestellten Ausführungsbeispiel hingegen ist der eine Antriebsmotor 2 durch eine als Sternmotor ausgebildete Brennkraftmaschine und der andere Antriebsmotor durch einen Elektromotor 3a gebildet.

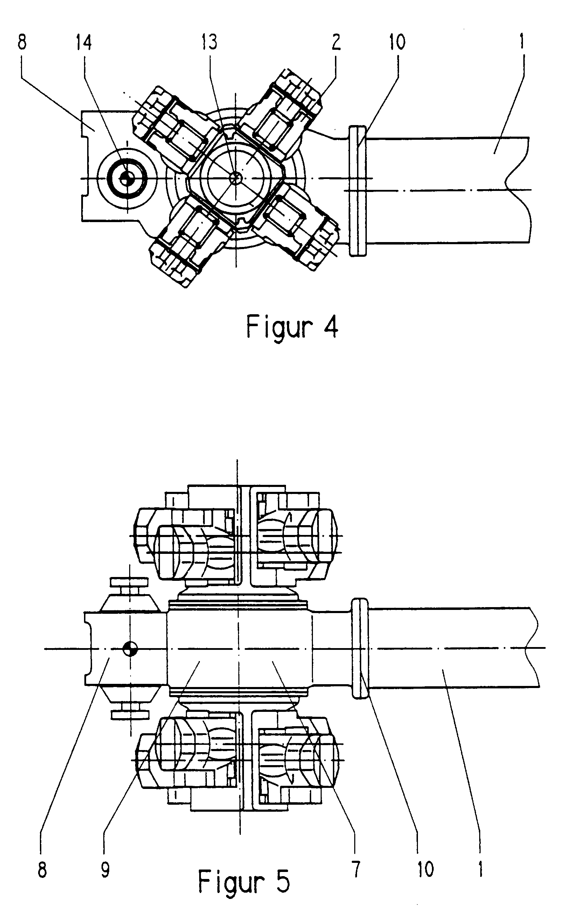

In den Figuren 2 bis 6 sind verschiedene Formen der Anordnung der Antriebsmotoren 2 und 3 bzw. 3a aufgezeigt, wobei die in den Figuren 2 bis 5 dargestellten Ausführungsformen hauptsächlich für Straßenfahrzeuge bestimmt sind und sich dadurch auszeichnen, daß die Abtriebsachsen 13 der Antriebsmoroten 2 und 3 bzw. 3a wenigstens annähernd in Höhe der Radachsen 14 angeordnet sind. Zur Gewährleistung einer guten Traktion der angetriebenen Vorderräder 15 der Fahrzeuges einerseits und zum Gewichtsausgleich für eine hohe Zuladung des Fahrzeuges andererseits sind bei dem in den Figuren 2 und 3 dargestellten Ausführungsbeispiel die beiden Antriebsmotoren 2 und 3 vor der durch die Radachse 14 markierten Vorderachse angeordnet. Bei dem in den Figuren 4 und 5 dargestellten Ausführungsbeispiel sind die beiden Antriebsmotoren 2 und 3 hingegen hinter der durch die Radachse 14 markierten Vorderachse angeordnet, woraus sich eine für das Fahrverhalten des Fahrzeuges günstige Verlagerung des Gesamtschwerpunktes zur Fahrzeugmitte hin ergibt.
Die in der Figur 6 sowie in den Figuren 11 und 12 dargestellte Ausführungsform eignet sich insbesondere für sog. Off-Road-Fahrzeuge und zeichnet sich dadurch aus, daß die Abtriebsachsen 13 der Antriebsmotoren 2 und 3 bzw. 3a den Radachsen 14 gegenüber hochliegend angeordnet sind, woraus sich eine vergrößerte Bodenfreiheit des Fahrzeuges insgesamt ergibt. Wahrend bei den meisten der dargestellten Ausführungsformen das Schaltgetriebe 7 im Bereich zwischen den beiden Antriebsmotoren 2 und 3 bzw. 3a und unterhalb deren Abtriebsachsen 13 angeordnet ist, ist in in der Darstellung der Figur 5 angedeutet, daß das Schaltgetriebe 7 auch in Fahrtrichtung vor den Antriebsmotoren 2 und 3 bzw. 3a liegend angeordnet werden kann, falls dies aus bestimmten Gründen, z.B. der Gewichtsverteilung erwünscht sein sollte.
Wie insbesondere aus der Darstellung der Figur 7 ersichtlich besteht nach einer bevorzugten Ausführungsform die Antriebsverbindung zwischen den Antriebsmotoren 2 und 3 bzw. 3a und dem Schaltgetriebe 7 darin, daß die die Antriebsverbindung zwischen den Antriebsmotoren 2 und 3 bzw. 3a und dem Schaltgetriebe 7 vermittelnden Trennkupplungen 17 innerhalb des Anschlußgehäuses 9 angeordnet und mit einem Zentralrad 18 verbunden sind, welches vermittels eines Ketten-oder Zahnriementriebes 19 mit der Getriebeeingangswelle 12 in Antriebsverbindung steht.

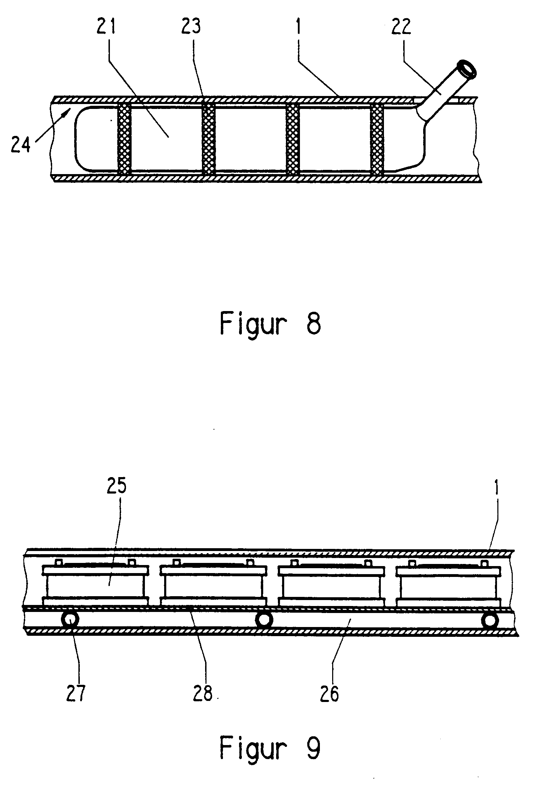

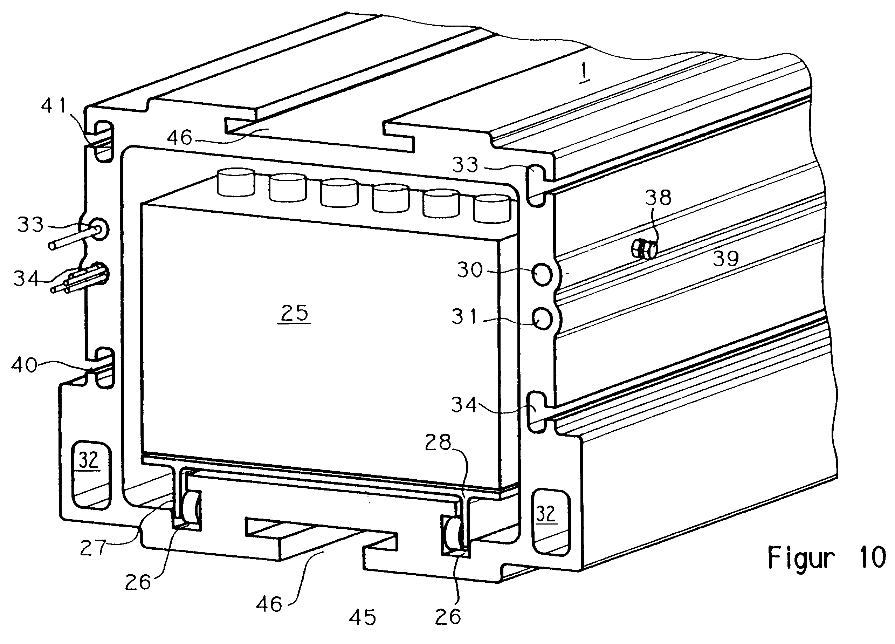

Wie ferner insbesondere aus den Darstellungen der Figuren 1 und 8 bis 10 ersichtlich sind in der Grundeinheit auch die Versorgungsanlagen für die Antriebsmotoren untergebracht, wobei die Figur 8 die Unterbringung des Kraftstofftankes 21 innerhalb des durch einen Abschnitt eines Strangpressprofiles gebildeten Tragrohres 1 zeigt. Der Kraftstofftank 21 besteht aus einer kraftstoffdampfdichten, flexiblen Hülle mit unlösbar und gleichfalls kraftstoffdampfdicht daran angeschossener Einfülleitung 22 samt evtl. darin angeordneter und in der Zeichnung nicht dargestellter Entlüftungsleitung und ist im eingebauten Zustand außenseitig örtlich mit den Innenumfangsflächen des Tragrohres 1 vermittels lösbarer Verklebung verbunden, wobei die lösbare Verklebung der den Kraftstofftank 21 bildenden flexiblen Hülle mit den Innenflächen des Tragrohres 1 umlaufend streifenförmig gestaltet ist. Dabei sind auf die Außenfläche der den Kraftstofftank 21 bildenden flexiblen Hülle vor dem Einführen in das Tragrohr 1 umlaufende Streifen 23 eines geeigneten Klebstoffes aufgetragen und wird die flexible Hülle nach dem Einführen in das Tragrohr 1 aufgebläht, derart daß die Klebstoffstreifen 23 mit den inneren Wandungflächen 24 des Tragrohres 1 in Berührung gelangen und dann in geeigneter Weise ausgehärtet werden können.
Gemäß der Darstellung in den Figuren 9 und 10 ist das durch einen Längenabschnitt eines Strangpressprofiles gebildete Tragrohr 1 wenigstens über einen Teil seiner Länge hin mit innenliegend angeordneten Mitteln zur Aufnahme von, die Energiequelle für einen als Elektromotor ausgebildeten Antriebsmotor 3a eines Hybridfahrzeuges bildenden, Batterien 25 ausgestattet. Im Tragrohr 1 sind hierzu innenliegend und längsgerichtet verlaufend Lauf-oder Tragschienen 26 bildende Profilleisten oder dergl. ausgebildet. Ein aus mehreren Batterien 25 bestehender Batteriesatz ist im gezeigten Ausführungsbeispiel im Tragrohr 1 vermittels einer über Rollen 27 gelagerten Tragplatte 28 bzw. eines Tragrahmens längsverfahrbar bzw. herausziehbar auf den innenliegende und längsgerichtet verlaufende Lauf-oder Tragschienen 26 bildenden Profilleisten des Tragroghrprofiles angeordnet, wobei für die Festlegung des Batteriesatzes 25 in seiner Betriebsstellung in der Zeichnung nicht näher gezeigte, übliche Verriegelungsmittel vorgesehen sind.

Bei der in der Figur 1 angedeuteten weiteren Ausgestaltungsform sind die Versorgungseinrichtungen 21 und 25 für beide Arten von Antriebsmotoren 2 und 3a eines Hybridfahrzeuges, d.h. der Kraftstofftank 21 für den als Brennkraftmaschine 2 ausgebildeten und die Batterien 25 für den als Elektromotor 3a ausgebildeten Antriebsmotor des Kraftfahrzeuges, in dem durch einen Abschnitt eines Strangpressprofiles gebildeten Tragrohr 1 in der Weise untergebracht, daß die Batterien 25 hinter dem Kraftstofftank 21 zum freien Ende des Tragrohres 1 hin angeordnet sind, um ihre Wartung zu ermöglichen.

Das aus einem Abschnitt eines Strangpressprofiles gebildete Tragrohr 1 weits im gezeigten Ausführungsbeispiel eine im allgemeinen rechteckige Profilquerschnittsform auf und ist mit einer Vielzahl von längsgerichteten Druckmittel-Leitungs-Kanälen 30, 31, 32 und schlitzförmig offenen Nutausnehmungen 33, 34 ausgestattet, wobei die Druckmittel-Leitungs-Kanäle 30, 31, 32 einen geschlossenen Querschnitt aufweisen und unmittelbar Fluid-Leitungen darstellen. Im Einzelnen bildet ein erster Kanal 30 die Verbindung des Hauptbremszylinders 35 mit den Radbremszylindern 36 Hinterradbremsen, wobei die flexiblen Abzweigleitungen 37 zu den einzelnen Radbremszylindern 36 mittels einschraubbarer Anschlußnippel 38 an den Kanal 30 angeschlossen sind. Ein zweite längsgerichteter Kanal 31 bildet eine Kraftstoffleitung 39 für die Verbindung des Kraftstofftanks 21 mit dem oder den Antriebsmotoren 2 und 3. Ein dritter Kanal 32 weist einen größeren Querschnitt auf und bildet einen Teil der Abgasleitung des oder den Antriebsmotoren 2 bzw. 3.

Von den einseitig offenen Nutausnehmungen 33 und 34 in dem als Strangpressprofil ausgebildeten Tragrohr 1 dient eine erste 33 der Aufnahme elektrischer Leitungen, insbesondere eines Kabelbaumes 40 und eine zweite 34 der Aufnahme eines Seilzuges 41, insbesondere des Handbremsseilzuges.

Bei einer in den Figuren 11 und 12 dargestellten Ausstattung des Fahrzeuges mit Allradantrieb ist die Antriebsverbindung vom Schaltgetriebe 7 bzw. von der Vorderachse 14 zur Hinterachse 42 vermittels eines Zahnriementriebes 43 bewerkstelligt. Der Zahnriemen 43 ist im gezeigten Ausdführungsbeispiel an den einander in vertikaler Richtung gegenüberliegenden Außenflächen 44 und 45 des Tragrohres 1 angeordnet und geführt. In entsprechender Ausbildung des das Tragrohr 1 bildenden Strangpressprofiles sind für die Aufnahme und Führung des die Antriebsübertragung auf die Hinterachse 42 bewirkenden Zahnriemens 43 an den einander in vertikaler Richtung gegenüberliegenden Außenflächen 44 und 45 des Tragrohres 1 einen symetrisch T-förmigen Profilquerschnitt aufweisende Führungsschächte 46 ausgebildet, in denen der Zahnriemen 43 über die Tragrohrlänge hin aufgenommen ist. Der Zahnriemen 43 ist im gezeigten Ausführungsbeispiel über an die beiden Enden des Tragrohres 1 anschließend zum einen am Schaltgetriebegehäuse 7 und zum anderen am Hinterachsgetriebegehäuse 47 angeordnete und gelagerte, untereinander gleichgroße Zahnriemenräder 48, deren Durchmesser der Profilhöhe des Tragrohres 1 entspricht, geführt. Das getriebeseitige Zahnriemenrad 48 ist dabei drehsicher mit einem Abtriebsrad des Schaltgetriebes verbunden, während das dem Hinterachsgetriebe 47 zugeordnete Zahnrienemrad 48 vorteilhaft drehsicher mit dem Tellerrad des Hinterachsgetriebes verbunden ist.

Schließlich sind insbesondere gemäß der Darstellung der Figur 1 am Tragrohr 1 wenigstens zum Teil auch die Betätigungs- und Bedieneinrichtungen des Fahrzeuges, wie Schalthebel 49 und Handbremshebel 50 und dergl. angeschlossen bzw. abgestützt und befestigt.

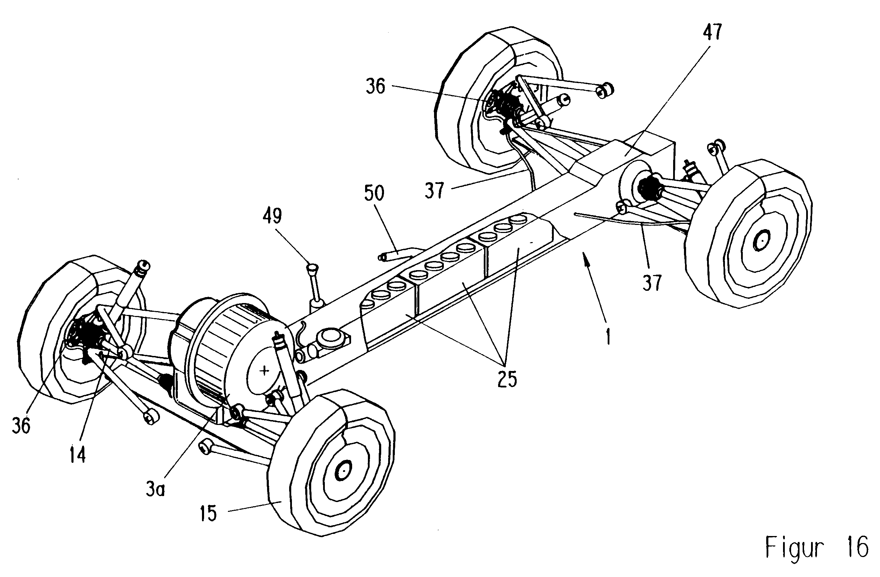

In der Figur 16 ist eine lediglich mit einem Elektromotor 3a ausgestattete Ausführungsform der Grundeinheit dargerstellt, wobei ein einseitig an das Tragrohr 1 angeschlossener Elektromotor 3a vorgesehen ist, der durch einen innerhalb des Tragrohres 1 angeordneten Baterriesatzes 25 mit Energie versorgt wird.

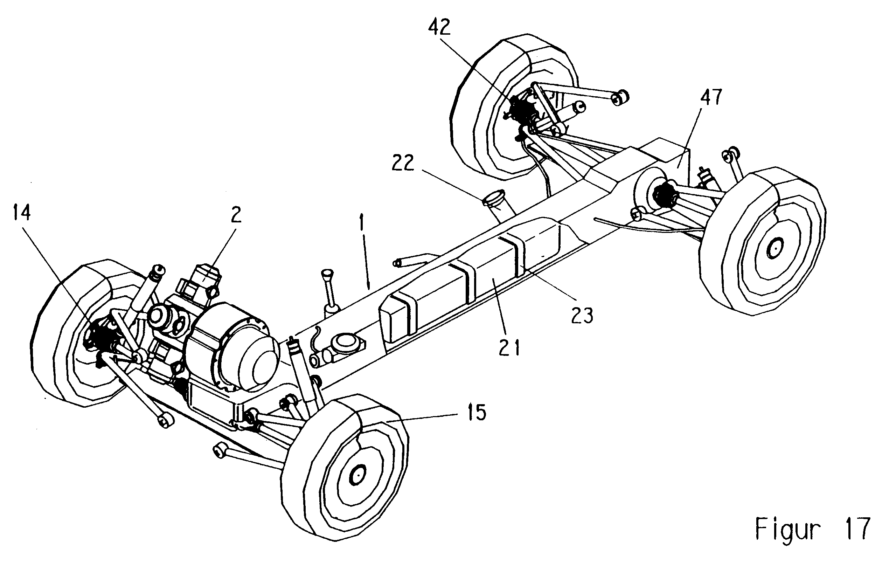

In der Figur 17 ist eine lediglich mit einer als Sternmotor bzw. einem X-Motor ausgebildeten Brennkraftmaschine ausgestattete Ausführungsform der Grundeinheit dargestellt, wobei zur Versorgung der Brennkraftmaschine 2 bzw.3 ein innerhalb des Tragrohres 1 angeordneter Kraftstofftank 21 vorgesehen ist.

## Patentansprüche

1. Grundeinheit für ein Kraftfahrzeug, bestehend aus einem Tragrohr, wenigstens zwei voneinander unabhängig betreibbaren und symetrisch zur Längsachse der Grundeinheit angeordneten Antriebsmotoren samt Hilfseinrichtungen und einem Schaltgetriebe sowie wenigstens einem Achsgetriebe samt zugehöriger Drehmomentübertragungseinrichtungen, wobei die beiden Antriebsmotoren mittels eines Anschlußgehäuses an das Tragrohr angeschlossen sind und über je eine Trennkupplung einzeln oder gemeinsam mit der Eingangswelle des Schaltgetriebes verbindbar sind, dadurch gekennzeichnet, daß das Tragrohr (1) durch einen Längenabschnitt eines Strangpressprofiles gebildet und starr mit dem Anschlußgehäuse (9) verbunden ist, wobei die Antriebsmotoren (2 und 3 bzw.3a) jeweils mit einer eigenen, im Motorgehäuse angeordneten Schwungmasse versehen und die Trennkupplungen (11) innerhalb des Anschlußgehäuses (9) angeordnet sind und wobei die Antriebsmotoren (2 und 3 bzw. 3a) vermittels untereinander gleich ausgebildeter Anschlußflächen austauschbar mit dem Anschlußgehäuse (9) verbunden sind.

2. Grundeinheit nach Anspruch 1, dadurch gekennzeichnet, daß die beiden Antriebsmotoren (2 und 3) durch eine Brennkraftmaschine gebildet und jeweils als Sternmotor ausgebildet sind.

3. Grundeinheit nach Anspruch 1, dadurch gekennzeichnet, daß von den beiden Antriebsmotoren (2 und 3) einer durch eine als Sternmotor (2) ausgebildete Brennkraftmaschine und einer als Elektromotor (3a) ausgebildet ist.

4. Grundeinheit nach einem der Ansprüche 1 bis 3, dadurch gekennzeichnet, daß die Abtriebswellen (13) der beiden symetrisch zur Längsachse der Grundeinheit angeordneten Antriebsmotoren (2 und 3 bzw. 3a) höhengleich zu den Radachsen (14) angeordnet sind.

5. Grundeinheit nach einem der Ansprüche 1 bis 3, dadurch gekennzeichnet, daß die Abtriebswellen (13) der beiden symetrisch zur Längsachse der Grundeinheit angeordneten Antriebsmotoren (2 und 3 bzw. 3a) höhenversetzt zu den Radachsen (14) angeordnet sind.

6. Grundeinheit nach einem der Ansprüche 1 bis 5, dadurch gekennzeichnet, daß das Anschlußgehäuse (9) und das Getriebegehäuse (7) sowie gegebenenfalls das Achsgetriebegehäuse (8) eine Baueinheit bilden.

7. Grundeinheit nach einem der Ansprüche 1 bis 5, dadurch gekennzeichnet, daß das Getriebegehäuse (7) und gegebenenfalls das Achsgetriebegehäuse (8) mittels Anschlußflansche und Verschraubung starr mit dem Anschlußgehäuse (9) verbunden sind.

8. Grundeinheit nach einem der Ansprüche 1 bis 7, dadurch gekennzeichnet, daß die die Antriebsverbindung mit den Antriebsmotoren (2 und 3 bzw.3a) vermittelnden Trennkupplungen (11) mit einem gleichfalls im Anschlußgehäuse (9) untergebrachten Zentralrad (18) verbunden sind, welches vermittels eines Ketten-oder Zahnriementriebes (19) mit der Getriebeeingangswelle (20) in Antriebsverbindung steht.

9. Grundeinheit nach einem der Ansprüche 1 bis 8, dadurch gekennzeichnet, daß Versorgungseinrichtungen (21 und 25) für die Antriebsmotoren (2 und 3 bzw.3a), insbesondere der Kraftstofftank (21) des Kraftfahrzeuges, in das durch einen Abschnitt eines Strangpressprofiles gebildete Tragrohr (1) integriert sind.

10. Grundeinheit nach einem der Ansprüche 1 bis 9, dadurch gekennzeichnet, daß der Kraftstofftank (21) aus einer kraftstoffdampfdichten, flexiblen Hülle mit unlösbar und gleichfalls kraftstoffdampfdicht daran angeschossener Einfülleitung (22) samt evtl. Entlüftungsleitung besteht und im eingebauten Zustand außenseitig mindestens örtlich mit den Innenumfangsflächen des Tragrohres (1) vermittels Verklebung (23) verbunden ist.

11. Grundeinheit nach einem der Ansprüche 1 bis 10, dadurch gekennzeichnet, daß die Verklebung (23) der den Kraftstofftank (21) bildenden flexiblen Hülle umlaufend streifenförmig gestaltet ist.

12. Grundeinheit nach einem der Ansprüche 1 bis 11, dadurch gekennzeichnet, daß das Tragrohr (1) mit innenliegend angeordneten Mitteln zur Aufnahme von Batterien (25) ausgestattet ist.

13. Grundeinheit nach einem der Ansprüche 1 bis 12, dadurch gekennzeichnet, daß am Tragrohr (1) innenliegend längsgerichtet verlaufende Lauf-oder Tragschienen (26) für die Abstützung und Festlegung der Batterien (25) bildende Profilleisten oder dergl. ausgebildet sind.

14. Grundeinheit nach einem der Ansprüche 1 bis 13, dadurch gekennzeichnet, daß ein aus mehreren Batterien (25) bestehender Batteriesatz im Tragrohr (1) vermittels einer, gegebenenfalls rollengelagerten Tragplatte (28) bzw. eines Tragrahmens längsverschiebbar bzw. herausnehmbar auf den innenliegend und längsgerichtet verlaufenden Lauf-oder Tragschienen (26) bildenden Profilleisten angeordnet ist.

15. Grundeinheit nach einem der Ansprüche 1 bis 14, dadurch gekennzeichnet, daß das Tragrohr (1) eine im allgemeinen rechteckige oder ovale Profilquerschnittsform aufweist und mit einer Vielzahl von längsgerichteten Druckmittel-Leitungs-Kanälen ( 30,31,32) und/oder wenigstens schlitzförmig offenen Nutausnehmungen (33,34) ausgestattet ist.

16. Grundeinheit nach einem der Ansprüche 1 bis 15, dadurch gekennzeichnet, daß das Tragrohr (1) mit wenigstens einem längsgerichteten Kanal (30) für die Verbindung des Hauptbremszylinders (35) mit den Hinterradbremsen ausgestattet ist, und daß die flexiblen Abzweigleitungen (37) zu den einzelnen Radbremszylindern (36) mittels einschraubbarer Anschlußnippel (38) an den jeweiligen Kanal (30) anschließbar sind.

17. Grundeinheit nach einem der Ansprüche 1 bis 16, dadurch gekennzeichnet, daß das Tragrohr (1) mit wenigstens einem längsgerichteten Kanal (31) ausgestattet ist, der wenigstens über einen Teil seiner Länge hin als Kraftstoffleitung (39) für die Verbindung des Kraftstofftanks (21) mit dem oder den Antriebsmotoren (2 und 3 bzw.3a) dient.

18. Grundeinheit nach einem der Ansprüche 1 bis 17, dadurch gekennzeichnet, daß das Tragrohr (1) mit wenigstens einem längsgerichteten Kanal (32) ausgestattet ist, der dem oder den Antriebsmotoren (2 und 3) als Abgasleitung dient.

19. Grundeinheit nach einem der Ansprüche 1 bis 18, dadurch gekennzeichnet, daß das Tragrohr (1) mit wenigstens einem längsgerichteten Kanal oder einer längsgerichteten Nutausnehmung (33) ausgestattet ist, der bzw. die der Aufnahme elektrischer Leitungen, insbesondere eines Kabelbaumes (40) dient.

20. Grundeinheit nach einem der Ansprüche 1 bis 19, dadurch gekennzeichnet, daß das Tragrohr (1) mit wenigstens einem längsgerichteten Kanal oder einer längsgerichteten Nutausnehmung (34) ausgestattet ist, der bzw. die der Aufnahme eines Seilzuges (41), insbesondere des Handbremsseilzuges, dient.

21. Grundeinheit nach einem der Ansprüche 1 bis 20, dadurch gekennzeichnet, daß bei einer Ausstattung des Fahrzeuges mit Allradantrieb die Antriebsverbindung zur Hinterachse (42) vermittels eines Riementriebes, insbesondere eines Zahnriementriebes (43), bewerkstelligt ist.

22. Grundeinheit nach einem der Ansprüche 1 bis 21, dadurch gekennzeichnet, daß bei Anwendung eines Zahnriementriebes (43) zur Antriebsübertragung auf die Hinterachse (42) der Zahnriemen (43) an den einander gegenüberliegenden Außenflächen (44 und 45) des Tragrohres (1) angeordnet und geführt ist.

23. Grundeinheit nach einem der Ansprüche 1 bis 22, dadurch gekennzeichnet, daß für die Aufnahme und Führung des die Antriebsübertragung auf die Hinterachse (42) bewirkenden Zahnrienmens (43) an den einander gegenüberliegenden Aussenflächen (44 und 45) des Tragrohres (1) einen symetrisch oder asymetrisch T-förmigen Profilquerschnitt aufweisende Führungsschächte (46) ausgebildet sind.

24. Grundeinheit nach einem der Ansprüche 1 bis 23, dadurch gekennzeichnet, daß der Zahnriemen (43) über an die beiden Enden des Tragrohres (1) anschließend zum einen am Getriebegehäuse (7) und zum anderen am Hinterachsgetriebegehäuse (47) angeordnete und gelagerte, hinsichtlich ihres Durchmessers dem Vortrieb angepasste Riemenscheiben, insbesondere Zahnriemenräder (48), z.B. solche, deren Durchmesser der Profilhöhe des Tragrohres (1) entspricht, geführt ist.

25. Grundeinheit nach einem der Ansprüche 1 bis 24, dadurch gekennzeichnet, daß am Tragrohr (1) in an sich bekannter Weise Betätigungs- und Bedieneinrichtungen, wie Schalthebel (49) und Handbremshebel (50) und dergl. angeschlossen bzw. abgestützt und befestigt sind.

## Claims

1. Basic unit for a motor vehicle, consisting of a support tube, at least two driving engines able to be operated independently of each other and arranged symmetrically with respect to the longitudinal axis of the basic unit, together with auxiliary devices and a gear-shift mechanism as well as at least one axle gear box together with associated torque-transmission devices, the two driving engines being connected to the support tube by means of a connection housing and being able to be connected individually or jointly to the input shaft of the gear-shift mechanism by way of respectively one disconnection clutch, characterised in that the support tube (1) is formed by a longitudinal section of an extrusion and is rigidly connected to the connection housing (9), the driving engines (2 and 3, 3a) being respectively provided with an individual flywheel mass located in the engine housing and the disconnecting clutches (11) being located inside the connection housing (9) and the driving engines (2 and 3, 3a) being connected to the connection housing (9) so that they are exchangeable by means of connection surfaces having an identical construction.

2. Basic unit according to Claim 1, characterised in that the two driving engines (2 and 3) are formed by an internal combustion engine and are respectively constructed as a radial engine.

3. Basic unit according to Claim 1, characterised in that of the two driving engines (2 and 3), one is constructed as an internal combustion engine constructed as a radial engine (2) and one is constructed as an electric motor (3a).

4. Basic unit according to one of Claims 1 to 3, characterised in that the output shafts (13) of the two driving engines (2 and 3, 3a) arranged symmetrically with respect to the longitudinal axis of the basic unit are arranged at the same height as the wheel axles (14).

5. Basic unit according to one of Claims 1 to 3, characterised in that the output shafts (13) of the two driving engines (2 and 3, 3a) arranged symmetrically with respect to the longitudinal axis of the basic unit are arranged at a staggered height with respect to the wheel axles (14).

6. Basic unit according to one of Claims 1 to 5, characterised in that the connection housing (9) and the gear casing (7) and possibly the axle gear casing (8) form one component.

7. Basic unit according to one of Claims 1 to 5, characterised in that the gear casing (7) and possibly the axle gear casing (8) are rigidly connected to the connection housing (9) by means of connection flanges and screwing.

8. Basic unit according to one of Claims 1 to 7, characterised in that the disconnecting clutches (11) providing the driving connection to the driving engines (2 and 3, 3a) are connected to a central wheel (18) likewise located in the connection housing (9), which central wheel (18) is in driving connection with the gear box input shaft (20) by means of a chain or toothed belt drive (19).

9. Basic unit according to one of Claims 1 to 8, characterised in that supply devices (21 and 25) for the driving engines (2 and 3, 3a), in particular the fuel tank (21) of the motor vehicle, are integrated in the support tube (1) formed by a section of an extrusion.

10. Basic unit according to one of Claims 1 to 9, characterised in that the fuel tank (21) consists of a flexible casing which is sealed with respect to fuel vapour, with a filling pipe (22) connected thereto undetachably and therefore in a sealed manner as regards fuel vapour, together with a possible breather pipe and in the installed state is connected externally at least locally to the inner peripheral surfaces of the support tube (1) by means of adhesive (23).

11. Basic unit according to one of Claims 1 to 10, characterised in that the adhesive (23) for sticking the flexible sleeve forming the fuel tank (21) is arranged to extend in strips.

12. Basic unit according to one of Claims 1 to 11, characterised in that the support tube (1) is equipped with internally located means for receiving batteries (25).

13. Basic unit according to one of Claims 1 to 12, characterised in that constructed on the support tube (1) are profiled bars or the like forming guide or bearing rails (26) extending longitudinally and internally, for supporting and fixing the batteries (25).

14. Basic unit according to one of Claims 1 to 13, characterised in that a battery set consisting of several batteries (25) is located in the support tube (1) by means of profiled bars forming a support plate (28) possibly mounted on rollers, or a support frame, to be longitudinally displaceable or removable on the guide rails or bearing rails (26) extending internally and being directed longitudinally.

15. Basic unit according to one of Claims 1 to 14, characterised in that the support tube (1) has a generally rectangular or oval profiled cross-sectional shape and is equipped with a plurality of longitudinally directed pressure medium pipe channels (30, 31, 32) and/or grooved recesses (33, 34) open at least in the form of slots.

16. Basic unit according to one of Claims 1 to 15, characterised in that the support tube (1) is equipped with at least one longitudinally directed channel (30) for the connection of the main brake cylinder (35) to the rear wheel brakes, and that the flexible branch pipes (37) to the individual wheel brake cylinders (36) can be connected to the respective channel (30) by means of connection nipples (38) which can be screwed in.

17. Basic unit according to one of Claims 1 to 16, characterised in that the support tube (1) is equipped with at least one longitudinally directed channel (31), which at least over part of its length serves as a fuel pipe (39) for the connection of the fuel tank (21) to the driving engine or engines (2 and 3, 3a).

18. Basic unit according to one of Claims 1 to 17, characterised in that the support tube (1) is equipped with at least one longitudinally directed channel (32), which serves the driving engine or engines (2 and 3) as an exhaust gas pipe.

19. Basic unit according to one of Claims 1 to 18, characterised in that the support tube (1) is equipped with at least one longitudinally directed channel or a longitudinally directed grooved recess (33), which serves to receive electrical leads, in particular a cable harness (40).

20. Basic unit according to one of Claims 1 to 19, characterised in that the support tube (1) is equipped with at least one longitudinally directed channel or one longitudinally directed grooved recess (34), which serves to receive a cable (41), in particular the hand brake cable.

21. Basic unit according to one of Claims 1 to 20, characterised in that when equipping the vehicle with four wheel drive, the driving connection to the back axle (42) is achieved by means of a belt drive, in particular a toothed belt drive (43).

22. Basic unit according to one of Claims 1 to 21, characterised in that when using a toothed belt drive (43) for transmitting the drive to the back axle (42), the toothed belt (43) is located and guided on opposite outer surfaces (44 and 45) of the support tube (1).

23. Basic unit according to one of Claims 1 to 22, characterised in that provided for receiving and guiding the toothed belt (43) bringing about the drive transmission to the back axle (42), on opposite outer surfaces (44 and 45) of the support tube (1), are guide shafts (46) having a symmetrical or asymmetrical T-shaped profile cross-section.

24. Basic unit according to one of Claims 1 to 23, characterised in that the toothed belt (43) is guided over a belt pulley located and mounted on the two ends of the support tube (1) then firstly on the gear casing (7) and secondly on the rear axle gear box casing (47), and which are adapted as regards their diameter to the forward thrust, in particular toothed belt wheels (48), for example those whereof the diameter corresponds to the profile height of the support tube (1).

25. Basic unit according to one of Claims 1 to 24, characterised in that actuating and operating devices, such as the control lever (49) and hand brake lever (50) and the like are connected or supported and attached to the support tube (1) in manner known per se.

## Revendications

1. Unité de base de véhicules automobiles, composée d'une poutre tubulaire (1) centrale, de deux moteurs de commande avec leurs dispositifs auxiliaires, disposés symétriquement par rapport à l'axe longitudinal de l'unité de base et pouvant être actionnés indépendamment l'un de l'autre, d'un mécanisme de changement de vitesse, et, d'au moins un mécanisme à arbres avec les dispositifs correspondants de transmission du couple, où les deux moteurs de commande sont assemblés avec la poutre tubulaire centrale grâce à un boîtier de raccordement et peuvent être reliés chacun, par l'intermédiaire d'un embrayage/débrayage, séparément ou ensemble, avec l'arbre moteur du mécanisme de changement de vitesse, *caractérisée en ce que*
- la poutre tubulaire centrale (1) qui est constituée d'un segment longitudinal de profilé filé, est assemblée de manière rigide avec le boîtier de raccordement (9),
- les moteurs de commande (2) et (3), respectivement (3a), sont pourvus chacun d'une masse d'inerte propre logés dans le carter du moteur,
- les embrayages/débrayages (11) sont logés à l'intérieur du boîtier de raccordement (9)
- les moteurs de commande (2) et (3), respectivement (3a), interchangeables sont reliés au boîtier de raccordement (9) par des surfaces de raccordement identiques les unes aux autres.

2. Unité de base selon la revendication 1 *caractérisée en ce que* les deux moteurs de commande (2), (3) sont des moteurs à combustion interne ayant la conformation de moteurs en étoile.

3. Unité de base selon la revendication 1 *caractérisée en ce que* l'un des moteurs de commande (2), (3) est un moteur à combustion interne ayant la conformation d'un moteur en étoile, l'autre moteur de commande étant constitué d'un moteur électrique (3a).

4. Unité de base selon l'une des revendications 1 à 3 *caractérisée en ce que* les arbres menés (13) des deux moteurs de commande (2) et (3), respectivement (3a), sont disposés symétriquement par rapport à l'axe longitudinal de l'unité de base et à la même hauteur par rapport aux essieux (14) des roues.

5. Unité de base selon l'une des revendications 1 à 3 *caractérisée en ce que* les arbres menés (13) des deux moteurs de commande (2) et (3), respectivement (3a), disposés symétriquement par rapport à l'axe longitudinal de l'unité de base, sont décalés en hauteur par rapport aux essieux (14) des roues.

6. Unité de base selon l'une des revendications 1 à 5 *caractérisée en ce que* le boîtier de raccordement (9) et le carter de boite de vitesse (7) et, en tant que de besoin, le carter de l'essieu (8), forment un module de construction.

7. Unité de base selon l'une des revendications 1 à 5 *caractérisée en ce que* le carter de boite de vitesse (7) et, en tant que de besoin le carter de l'essieu (8), sont assemblés par vissage de manière rigide avec le boîtier de raccordement (9) par l'intermédiaire d'une bride de raccordement.

8. Unité de base selon l'une des revendications 1 à 7 *caractérisée en ce que* les embrayages/débrayages assurant l'accouplement d'entraînement avec les moteurs de commande (2) et (3), respectivement (3a), sont associés à une roue centrale (18) également logée dans le boîtier de raccordement (9) et reliée, en vue de son entraînement, à l'arbre moteur (20) par l'intermédiaire d'une commande à chaîne ou à courroie dentée (19).

9. Unité de base selon l'une des revendications 1 à 8 *caractérisée en ce que* les dispositifs d'alimentation (21), (25) des moteurs de commande (2), (3), (3a), en particulier le réservoir de carburant (21), sont intégrés dans la poutre tubulaire centrale (1) constituée d'un segment de profilé filé.

10. Unité de base selon l'une des revendications 1 à 9 *caractérisée en ce que* le réservoir de carburant (21) est constitué d'une enveloppe souple, étanche à la vapeur de carburant, pourvue d'une conduite d'alimentation (22) indétachable, également étanche à la vapeur de carburant et, en tant que de besoin d'une conduite d'aération, et *en ce que* après montage, le réservoir de carburant (21) est assemblé par collage, par endroits de sa surface extérieure, avec la paroi périphérique intérieure de la poutre tubulaire centrale (1).

11. Unité de base selon l'une des revendications 1 à 10 *caractérisée en ce que* le collage de l'enveloppe souple constituant le réservoir de carburant (21) est réalisé par bandes périphériques.

12. Unité de base selon l'une des revendications 1 à 11 *caractérisée en ce que* la poutre tubulaire centrale (1) est pourvue en son intérieur de moyens de réception de batteries (25).

13. Unité de base selon l'une des revendications 1 à 12 *caractérisée en ce que* la poutre tubulaire centrale (1) est pourvue en son intérieur de profilés longitudinaux formant des glissières ou rails de support (26) servant à l'appui et à la fixation des batteries (25).

14. Unité de base selon l'une des revendications 1 à 13 *caractérisée en ce que* un groupe composé de plusieurs batteries (25) est disposé, en étant déplaçable longitudinalement et en pouvant être enlevé, sur les profilés longitudinaux intérieurs formant des glissières ou rails de supports (26) par l'intermédiaire d'une plaque de support (28), éventuellement disposée sur rouleaux, ou d'un cadre de support.

15. Unité de base selon l'une des revendications 1 à 14 *caractérisée en ce que* la poutre tubulaire centrale (1) présente une section transversale sensiblement rectangulaire ou ovale et est pourvue d'une multitude de canaux longitudinaux (30), (31), (32) pour le passage de moyens de pression et/ou de rainures (33), (34) ouvertes au moins par une fente.

16. Unité de base selon l'une des revendications 1 à 15 *caractérisée en ce que* la poutre tubulaire centrale (1) est pourvue d'au moins un canal longitudinal (30) pour assurer le raccord du cylindre de frein principal (35) avec les freins de roues arrières et *en ce que* les branches de conduit (37) flexibles permettant le raccord vers chaque cylindre de frein (36) peuvent être reliées au canal (30) par des raccords filetés (38) vissables.

17. Unité de base selon l'une des revendications 1 à 16 *caractérisée en ce que* la poutre principale (1) est pourvue d'au moins un canal longitudinal (31) qui sert, au moins sur une partie de sa longueur, de conduit du carburant permettant la liaison du réservoir de carburant (21) et du/des moteur(s) de commande (2), (3), (3a).

18. Unité de base selon l'une des revendications 1 à 17 *caractérisée en ce que* la poutre tubulaire centrale (1) est pourvue d'au moins un canal longitudinal (32) qui sert de conduit de gaz d'échappement au(x) moteur(s) de commande (2), (3).

19. Unité de base selon l'une des revendications 1 à 18 *caractérisée en ce que* la poutre tubulaire centrale (1) est pourvue d'au moins un canal longitudinal ou d'au moins une rainure longitudinale (33) qui sert à loger des câbles électriques, notamment le faisceau de câbles (40).

20. Unité de base selon l'une des revendications 1 à 19 *caractérisée en ce que* la poutre tubulaire centrale (1) est pourvue d'au moins un canal longitudinal ou d'au moins une rainure longitudinale (34) qui sert à loger un câble de transmission (41), en particulier le câble du frein à main.

21. Unité de base selon l'une des revendications 1 à 20 *caractérisée en ce que* dans le cas de véhicules à traction intégrale, l'accouplement d'entraînement de l'essieu arrière (42) est assuré par une commande à courroie, en particulier une commande à courroie dentée (43).

22. Unité de base selon l'une des revendications 1 à 21 *caractérisée en ce que* en cas d'utilisation d'une commande à courroie dentée (43) pour la transmission de l'entraînement vers l'essieu arrière (42), ladite courroie dentée (43) est disposée et conduite sur les surfaces extérieures (44), (45) se faisant face de la poutre tubulaire centrale (1).

23. Unité de base selon l'une des revendications 1 à 22 *caractérisée en ce que* la courroie dentée (43) assurant la transmission de l'entraînement vers l'essieu arrière (42) est disposée et guidée sur les surfaces extérieures se faisant face de la poutre tubulaire centrale (1) par l'intermédiaire de gorges de guidage (46) présentant une section transversale de profilé en forme de T symétrique ou asymétrique.

24. Unité de base selon l'une des revendications 1 à 23 *caractérisée en ce que* la courroie dentée (43) court autour de poulies, en particulier de roues dentées (48), dont le diamètre est adapté à l'avancement et correspond par exemple à la hauteur du profilé de la poutre tubulaire centrale (1), qui prolongent les extrémités de ladite poutre (1) et qui sont disposés d'une part sur le carter de boite de vitesse (7) et d'autre part sur le carter de l'essieu arrière (47).

25. Unité de base selon l'une des revendications 1 à 24 *caractérisée en ce que* sur la poutre tubulaire centrale (1) sont disposés ou fixés de manière connue des éléments d'actionnement et de commande, tels que le levier de vitesse (49) ou le levier de frein à main (50).
